# EUROPEAN PATENT SPECIFICATION

(11) **EP 1 691 436 B1**
(45) Date of publication and mention of the grant of the patent: **14.09.2011**
(21) Application number: 04792590.4
(22) Date of filing: 19.10.2004
(51) Int. Cl.: H01M 8/04, B62K 11/00, H01M 8/00, H01M 8/10

(54) **SADDLE RIDING-TYPE VEHICLE**
FAHRZEUG DES SATTELAUFSITZTYPS
VEHICULE DE TYPE A SELLE

(30) Priority: 24.10.2003 JP 2003365205
(43) Date of publication of application: 16.08.2006
(73) Proprietor: Yamaha Hatsudoki Kabushiki Kaisha, Iwata-shi, Shizuoka 438-8501 (JP)
(72) Inventor: KOHDA, Hideo, Yamaha Hatsudoki Kabushiki Kaisha, Iwata-shi, Shizuoka 4388501 (JP); MURAMATSU, Y., Yamaha Hatsudoki KabushikKaisha, Iwata-shi, Shizuoka 4388501 (JP)
(74) Representative: Grünecker, Kinkeldey, Stockmair & Schwanhäusser Anwaltssozietät
(86) International application number: PCT/JP2004/015421
(87) International publication number: WO 2005/041338

(56) References cited:
- EP-A1- 1 251 022
- JP-A- 2001 155 749
- JP-A- 2001 163 063
- JP-A- 2001 354 179
- JP-A- 2002 110 199
- JP-A- 2002 319 420
- JP-A- 2003 132 924
- JP-A- 2003 208 910
- JP-A- 2003 297 401

## Description

### TECHNICAL FIELD

The present invention relates to saddle-type vehicles, and more specifically to a saddle-type vehicle equipped with a fuel cell system which uses fuel directly without reformation for power generation.

### BACKGROUND ART

Research and development efforts have been made for direct methanol fuel cell {DMFC (Direct Methanol Fuel Cell); hereinafter may also be abbreviated as DMFC} system which uses methanol aqueous solution directly for power generation, as a fuel cell system that uses methanol as fuel for power generation.

Since there is no component required for reforming methanol, the entire DMFC system can be simple and light. For this reason, the DMFC system is expected to be used in a variety of applications. For example, efforts are being made for practical saddle-type vehicles such as a two-wheeled vehicle equipped with a DMFC system.

Saddle-type vehicles which are equipped with a saddle-like seat for the user to ride are used under a wide variety of environment and therefore can wear quickly. This indicates that these vehicles should preferably be easy to maintain. If there is a trouble in an aqueous solution tank which stores methanol aqueous solution to be supplied to the DMFC or in a fuel tank which stores methanol to be supplied to the aqueous solution tank, output from the DMFC can decrease, which would pose adverse affect on riding operation of the saddle-type vehicle equipped with the DMFC system. For this reason, it is preferable that in the saddle-type vehicle equipped with the DMFC, the fuel tank and the aqueous solution tank be disposed with particular care for easy maintenance.

As an example of the DMFC systems, the following Document 1 discloses a DMFC system of an output capacity of 2.5 kW.
Non-Patent Document 1: Holger Janssen, Marcus Noelke, Walter Zwaygardt, Hendrik Dohle, Juergen Mergel, Detlef Stolten, "DMFC SYSTEMS: 2.5 KW CLASS IN COMPACT DESIGN", Institute for Materials and Processes in Energy Systems Forschungszentrum Juelich GmbH 52425 Juelich, Germany

### DISCLOSURE OF THE INVENTION

### PROBLEMS TO BE SOLVED BY THE INVENTION

However, the above Document 1 does not disclose any suitable layout of the DMFC system for installation on a saddle-type vehicle, and it is unlikely that the saddle-type vehicle equipped with the DMFC system can be maintained easily.
Thus, a primary object of the present invention is to provide a saddle-type vehicle which can be maintained easily.

### MEANS FOR SOLVING THE PROBLEMS

According to the present invention, there is provide a saddle-type vehicle comprising: a seat for a rider to ride on, an aqueous solution tank for storing fuel aqueous solution; a fuel tank for storing fuel to be supplied to the aqueous solution tank; and a fuel cell stack supplied with the fuel aqueous solution from the aqueous solution tank for generation of electric energy through electrochemical reactions wherein the fuel tank and the aqueous solution tank are disposed next to each other behind the seat.

According to the present invention, the fuel tank and the aqueous solution tank are disposed next to each other behind the seat which the rider sits on. By structure of the saddle-type vehicles, the rider's seat is disposed in an upper portion of the saddle-type vehicle and between the front and rear wheels, and the space behind the rider's seat is not occupied by a large component necessary for operation of the saddle-type vehicle. By disposing the fuel tank and the aqueous solution tank next to each other behind the rider's seat as described above, sufficient working space can be secured around the fuel tank and the aqueous solution tank. Therefore, attaching and removing the fuel tank and the aqueous solution tank is easy, and it is possible to improve maintainability.

Preferably, the fuel cell stack is disposed below the seat. In this case, by disposing the fuel cell stack which is connected with a plurality of components below the seat i.e., substantially at the center of the saddle-type vehicle, it becomes possible to dispose all components connected with the fuel cell stack easily, and to shorten piping between the fuel cell stack and each component (particularly the aqueous solution tank) easily. Further, by disposing the fuel cell stack which is a heavy component substantially at the center of the saddle-type vehicle, a good weight balance is achieved in the saddle-type vehicle, enabling to improve stability.

Further preferably, the saddle-type vehicle further comprises a heat exchanger disposed below the seat and behind the fuel cell stack for cooling the fuel aqueous solution from the aqueous solution tank. In this case, the aqueous solution tank, the heat exchanger and the fuel cell stack lay sequentially from rear toward front. Therefore, piping from the aqueous solution tank through the fuel cell stack can be simplified without any need for bypassing the route of fuel aqueous solution, and the fuel aqueous solution from the aqueous solution tank can be supplied quickly to the fuel cell stack via the heat exchanger.

Further preferably, a total width of the fuel tank and the aqueous solution tank is not greater than the width of the seat. This allows the fuel tank and the aqueous solution tank to be placed next to each other behind the seat without protruding sideways with respect to the seat. Disposing the fuel tank and the aqueous solution tank next to each other without protruding sideways with respect to the seat reduces the likelihood of damage to the fuel tank and the aqueous solution tank at an occasion when the saddle-type vehicle is rolled down on its side. Further, by disposing the fuel tank and the aqueous solution tank next to each other without protruding sideways with respect to the seat, riding stability of the saddle-type vehicle at the time when the vehicle is tilted for making a turn for example can be improved without spreading the weight in lateral directions.

It should be noted here that "the total width of the fuel tank and the aqueous solution tank" means a total dimension of the width of the fuel tank and the width of the aqueous solution tank when they are placed side by side for example. If the fuel tank is placed behind or ahead of the aqueous solution tank, then, the term indicates whichever greater one of the widths of the two tanks.

Further preferably, the fuel tank and the aqueous solution tank are disposed next to each other substantially at the same height, and the saddle-type vehicle further comprises a fuel pump disposed below the fuel tank and the aqueous solution tank, and connected with the fuel tank and the aqueous solution tank for pumping the fuel from the fuel tank to the aqueous solution tank. In this case, it becomes possible to substantially equate the fluid level of fuel stored in the fuel tank to the fluid level of fuel aqueous solution stored in the aqueous solution tank. With this arrangement, when supplying the fuel from the fuel tank to the aqueous solution tank by using the fuel pump which is disposed below the fuel tank and the aqueous solution tank, it is possible to reduce pressure difference between the inlet and the outlet of the fuel pump caused by the fluid level difference in the tanks. As a result, it becomes possible to use a fuel pump which has a relatively small pumping capacity, and to improve supplying accuracy of the fuel by the fuel pump. Therefore, it is possible to design and manufacture the fuel pump easily, and to reduce the cost of design and manufacture of the entire fuel cell system which is to be mounted on the saddle-type vehicle. Further, by disposing the fuel pump below the fuel tank, it becomes easy to gravitationally supply the fuel from the fuel tank to the fuel pump.

Further, preferably, the aqueous solution tank is disposed as extending ahead. In this case, since the aqueous solution tank is extended forward, i.e., toward the center of the saddle-type vehicle, the aqueous solution tank is closer to the components such as the fuel cell stack which are connected with the aqueous solution tank, enabling to simplify the piping.

### BRIEF DESCRIPTION OF THE DRAWINGS

[Fig. 1] A left-side view of a two-wheeled vehicle according to an embodiment of the present invention.
[Fig. 2] A perspective view of the two-wheeled vehicle of Fig. 1, without a cover and other components.
[Fig. 3] A left-side perspective view, showing the general construction of a frame of the two-wheeled vehicle of Fig. 1 and Fig. 2 and a fuel cell system mounted on the frame.
[Fig. 4] A right-side perspective view, showing the general construction of the frame of the two-wheeled vehicle of Fig. 1 and Fig. 2 and the fuel cell system mounted on the frame.
[Fig. 5] A left-side perspective view, showing the general construction of the fuel cell system mounted on the two-wheeled vehicle of Fig. 1 through Fig. 4, etc.
[Fig. 6] A perspective view showing how a fuel tank and an aqueous solution tank are mounted onto the two-wheeled vehicle illustrated in Fig. 1 through Fig. 4, etc.
[Fig. 7] An illustration showing a piping structure between the aqueous solution tank and a water tank in the fuel cell system of Fig. 5.
[Fig. 8] An illustration showing an enlarged view of internal connections in the water tank, in the piping structure in the fuel cell system of Fig. 7.
[Fig. 9] A sectional view of a portion, taken along arrows IX-IX in Fig. 8, showing a connection between a connecting pipe which is connected with the water tank and a connecting pipe extending from the aqueous solution tank.
[Fig. 10] Fig. 10(a) is a plan view, showing the general construction of an integrated structure of the fuel tank and the aqueous solution tank of the fuel cell system mounted on the two-wheeled vehicle illustrated in Fig. 1 through Fig. 4, etc. Fig. 10(b) is a side view, showing the fuel tank and the aqueous solution tank in Fig. 10 (a) in the mounted state. Fig. 10(c) provides a sectional view taken in arrows X(c)-X(c) in Fig. 10 (a).
[Fig. 11] A block diagram of the fuel cell system of Fig. 5.

### LEGEND

- 1: Two-wheeled vehicle
- 3: Vehicle frame
- 7: Front frame
- 9: Rear frame
- 27: Seat rail
- 37: Seat
- 45: Rear arm
- 49: Rear wheel
- 61: Electric motor
- 63: Controller
- 70: Fuel cell system
- 73: Fuel cell stack
- 75: Fuel tank
- 77: Aqueous solution tank 81, 83, 91, 93, 97, 101, 113, 115, 118, 121, 128, 129, 133

### Connecting pipes

- 85: Fuel Pump
- 95: Aqueous solution pump
- 109: Air pump
- 123: Water tank
- 127: Water pump
- 155: Insulation member

### BEST MODE FOR CARRYING OUT THE INVENTION

Hereinafter, an embodiment of the present invention will be described, with reference to the drawings.
The description will cover a two-wheeled vehicle as a saddle-type vehicle according to the present invention.
It is noted that the terms left and right (sides), front and rear, up and down as used in this embodiment are determined from the rider' s seat of a two-wheeled vehicle 1, with the rider facing toward the handles.

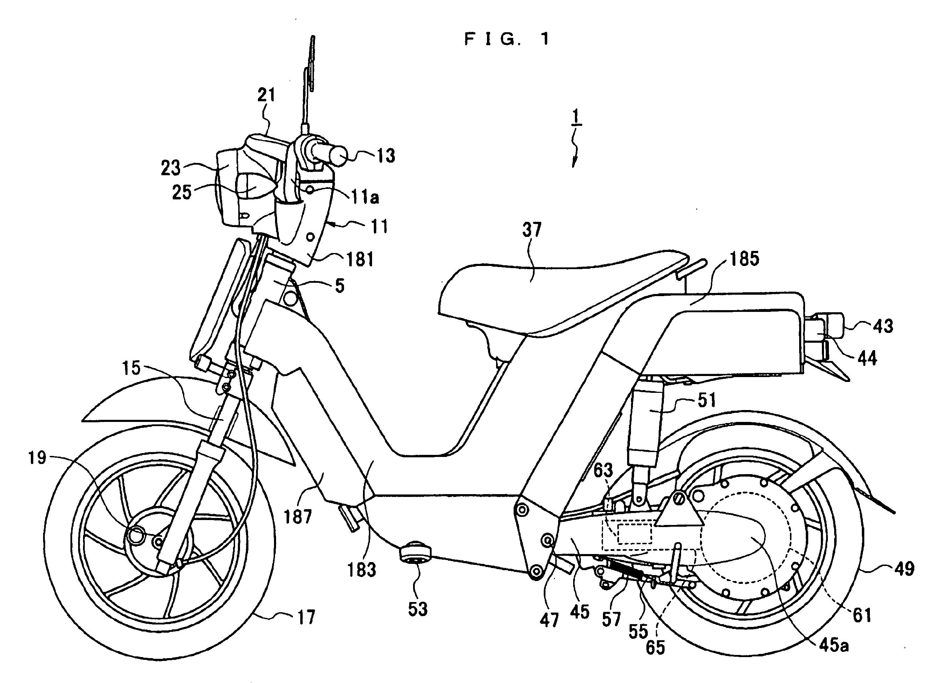

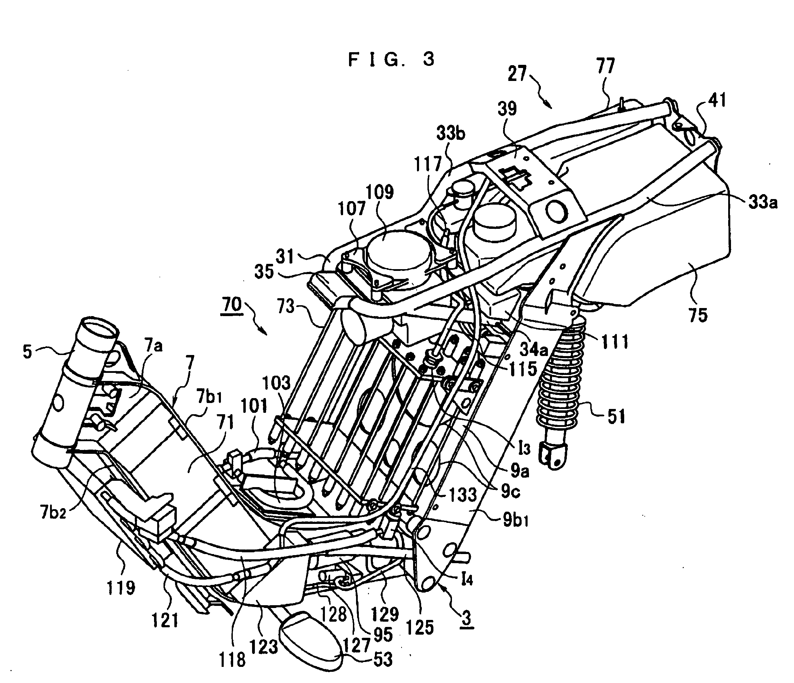

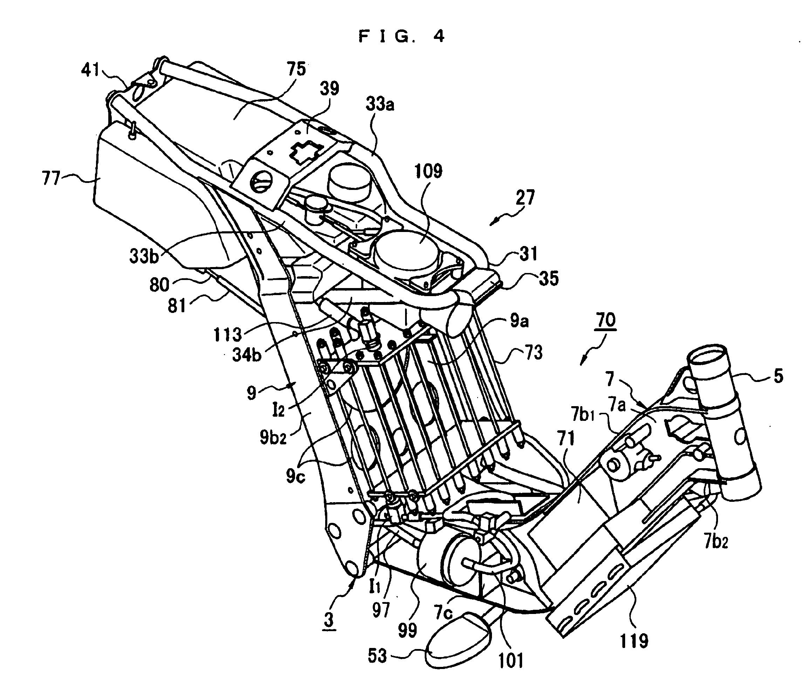

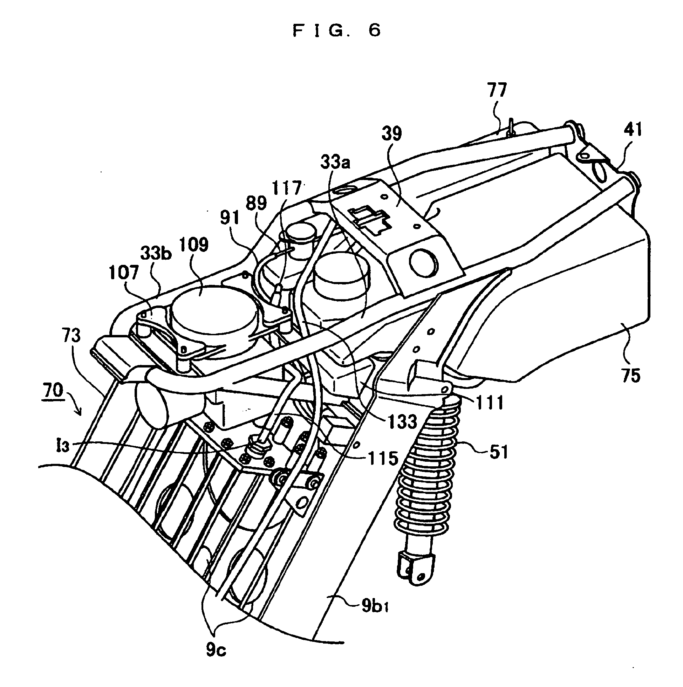

Referring to Fig. 1 through Fig. 6, the two-wheeled vehicle 1 includes a vehicle frame 3. The vehicle frame 3 includes a head pipe 5, a front frame 7 which has an I-shaped vertical section and extends in a rearward and downward direction from the head pipe 5, a rear frame 9 which has an H-shaped cross section, is connected with a rear end of the front frame 7 and rising in a rearward and upward direction, and a seat rail 27. The front frame 7 and the rear frame 9 combine to form a substantially V-shape configuration as viewed from side.

The front frame 7 includes a plate member 7a which extends in an axial direction of the vehicle and perpendicularly to the width of the vehicle, flanges 7b1, 7b2 which extend widthwise along a top surface and a bottom surface of the plate member 7a respectively, and reinforcing ribs 7c protruding from both surfaces of the plate member 7a. The reinforcing ribs 7c and the flanges 7b1, 7b2 provide compartments on both surfaces of the plate member 7a, which define storage walls for components of a fuel cell system 70 to be described later.

On the other hand, the rear frame 9 includes a plate member 9a which extends diagonally with respect to the vehicle axis in a rearward direction, facing an upper surface of the flange 7b1 of the front frame 7, and flanges 9b1, 9b2 which extend axially of the vehicle on the left and the right sides of the plate member 9a respectively.
The plate member 9a of the rear frame 9 includes a plurality of air holes 9c for ventilation/cooling of an aqueous solution tank 77 to be described later.

An unillustrated steering shaft is pivotably inserted into the head pipe 5 for steering the vehicle. A handle support 11 to which a handle 11a is fixed is provided at an upper end of the steering shaft. Grips 13 are provided at two ends of the handle 11a. The right-hand grip 13 is a rotatable throttle grip.

A pair of left and right front forks 15 extend downwardly from a bottom end of the head pipe 5. Each of the front forks 15 includes a bottom end supporting a front wheel 17 via a front wheel shaft 19. The front wheel 17 is suspended by the front forks 15, and is freely rotatable around the front wheel shaft 19.

A display/operation board (hereinafter simply called a meter) 21 is provided in front of the handle 11a of the handle support 11. The meter 21 defines an integrated dashboard including a display, such as a liquid crystal display, for providing the rider with a variety of information concerning the ride, and input devices via which the rider inputs a variety of information. A head lamp 23 is fixed below the meter 21 at the handle support 11, and a flasher lamp 25 is provided on each of the left and right sides of the head lamp 23.

The seat rail 27 which is attached to a rear end of the rear frame 9, is made of pipe members, and has a substantially U-shaped configuration.
The seat rail 27 includes a curved pipe 31 having a substantially C-shaped configuration, a pair of left and right seat supporting pipes 33a, 33b extending from ends of the curved pipe 31, and branch pipes 34a, 34b branching from the seat supporting pipes 33a, 33b and extending diagonally in a rear downward direction.

The seat supporting pipes 33a, 33b of the seat rail 27 have their mutually opposing intermediate regions that are fixed to upper ends of the flanges 9b1, 9b2 of the rear frame 9 by welding, for example. Further, the rear ends of the branch pipes 34a, 34b are fixed by welding for example, to the plate member 9a of the rear frame 9. The seat rail 27 extends substantially horizontally along the vehicle axis.

The curved pipe 31 of the seat rail 27 supports a seat stay 35 extending therefrom, to which a rider's seat 37 is attached, covering the curved pipe 31 of the seat rail 27 and a portion of the seat supporting pipes 33a, 33b over the regions where the seat supporting pipes are fixed to the frame. The seat 37 is pivotable (to open and close) via the seat stay 35, toward and away from the seat rail 27.

An engagement bracket 39 bridges the seat supporting pipes 33a, 33b of the seat rail 27, at a location ahead of the seat rail weldment where the seat supporting pipes are opposed to each other and locks the seat 37 in a closed position.

A mounting bracket 41 is fixed to rear ends of the seat supporting pipes 33a, 33b of the seat rail 27. The mounting bracket 41 supports a tail lamp 43 and a pair of left and right flash lamps 44.

The rear frame 9 includes a lower end which pivotably supports a rear arm 45 via a pivot shaft 47. The rear arm 45 has a rear end 45a which rotatably supports a rear wheel 49 as a driving wheel on a shaft. The rear arm 45 and the rear wheel 49 are suspended so as to absorb shock, with respect to the rear frame 9 by a rear shock absorber 51.

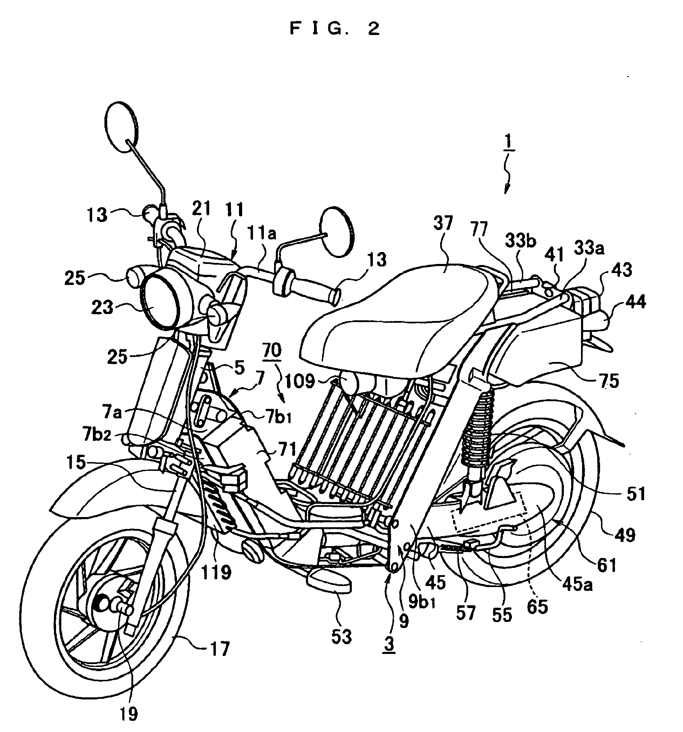

A pair of left and right foot steps 53 are provided at a rear bottom portion of the front frame 7 (Fig. 1 and Fig. 2 show only one of the two foot steps). Behind the left foot step 53, a kick stand 55 is pivotably supported by the rear arm 45. The kick stand 55 is biased in a closing direction by a return spring 57.

An electric motor 61 of an axial gap type, for example, is provided inwardly of a rear end 45a of the rear arm 45, and connected with the rear wheel 49 to rotate the rear wheel 49. A drive unit 65 which is electrically connected with the electric motor 61 and includes a controller 63 for controlling the rotating drive of the electric motor 61 is also provided inwardly of a rear end of the rear arm.

In addition, the two-wheeled vehicle 1 according to the present embodiment includes a fuel cell system 70 mounted along the vehicle frame 3 (the front frame 7, the rear frame 9 and the seat rail 27), and a secondary battery 71 stored in the storage space enclosed by the ribs 7c on both surfaces of the plate member 7a of the front frame 7. The fuel cell system 70 generates electric energy for driving the electric motor 61 and for operating fuel cell components and other electric components. The secondary battery 71 stores the electric energy generated by the fuel cell system 70, and supplies the stored electric energy to the electric components under the control of the controller 63. For example, the secondary battery 71 supplies electric energy to the drive unit 65, thereby driving the electric motor 61 to turn the rear wheel 49 and move the two-wheeled vehicle 1.

Hereinafter, the fuel cell system 70 will be described.
The fuel cell system 70 equipped in the two-wheeled vehicle 1 according to the present embodiment is a direct methanol fuel cell system which uses methanol (an aqueous solution of methanol) directly without reformation for power generation.

The fuel cell system 70 includes a fuel cell stack (hereinafter simply called a cell stack) 73 mounted along a forward surface of the plate member 9a of the rear frame 9, below the seat 37 at a substantial center of the two-wheeled vehicle 1.

The cell stack 73 is a stack of a plurality of single battery cells, each of which is capable of generating electric energy through electrochemical reactions between hydrogen derived from methanol, and oxygen. Each single battery cell of the cell stack 73 includes an electrolyte (electrolyte film) provided by, e.g. a solid molecular film, and a pair of a fuel electrode (anode) and an air electrode (cathode) facing each other with the electrolyte in between. It should be noted here that single battery cells are not illustrated in Fig. 2 through Fig. 6.

Behind and above the cell stack 73 at the rear of the seat 37 (above the rear wheel 49) are a fuel tank 75 and an aqueous solution tank 77 disposed side by side. Each of the fuel tank 75 and the aqueous solution tank 77 extends forwardly, with its front side end reaching beneath the seat 37. The fuel tank 75 and the aqueous solution tank 77 are mounted below the supporting frames 33a, 33b via, e.g. a mounting bracket 41 on the seat rail 27. The fuel tank 75 and the aqueous solution tank 77 are formed by PE (polyethylene) blow molding, for example. The fuel tank 75 and the aqueous solution tank 77 are made of resin.

The fuel tank 75 contains a methanol fuel (high concentration aqueous solution of methanol) having a high concentration level (approximately 50%, for example) which is used as fuel for the above-mentioned electrochemical reaction in the cell stack 73.

The aqueous solution tank 77 contains aqueous solution of the methanol, which is solution of the methanol fuel from the fuel tank 75 diluted to a suitable concentration (approximately 3%, for example) for the electrochemical reaction in the cell stack 73.

The fuel tank 75 and the aqueous solution tank 77 are placed side by side, and are integrated with each other so as to be disposed at substantially the same height (such that the two tanks have their bottom surfaces at substantially the same height, for example), and mounted on the seat rail 27. The statement that the fuel tank 75 and the aqueous solution tank 77 are disposed at substantially the same height means that the two tanks are disposed so that the level of methanol fuel in the fuel tank 75 will be within ± 10 cm of the level of methanol aqueous solution in the aqueous solution tank 77 when the fuel cell system 70 is in operation. Preferably, the layout of the two tanks are made so that the fluid level difference will stay within ± 5 cm. When integrated, the fuel tank 75 and the aqueous solution tank 77 have a total width not greater than the width of the seat 37 (See Fig. 2).

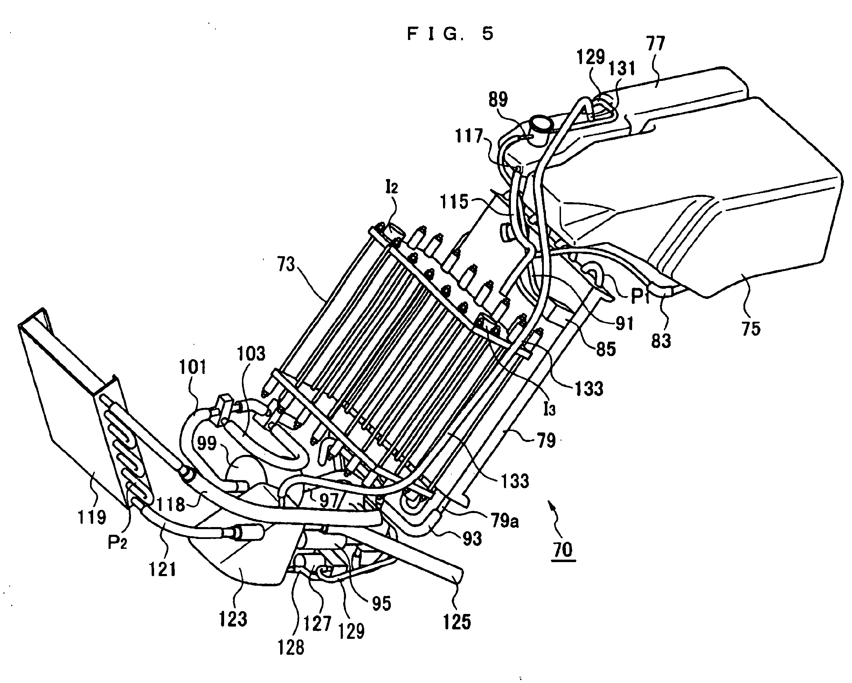

As shown in Fig. 5, a heat exchanger 79 is disposed behind the cell stack 73, in line with the cell stack 73. The heat exchanger 79 is arranged along the cell stack 73, mounted on a rearward surface of the plate member 9a, below the seat 37. The heat exchanger 79, which cools the methanol aqueous solution from the aqueous solution tank 77, includes a heat exchange pipe P1 having an inlet connected with a methanol aqueous solution outlet 80 on e.g. a bottom portion of the aqueous solution tank 77, via a connecting pipe (connection piping) 81.

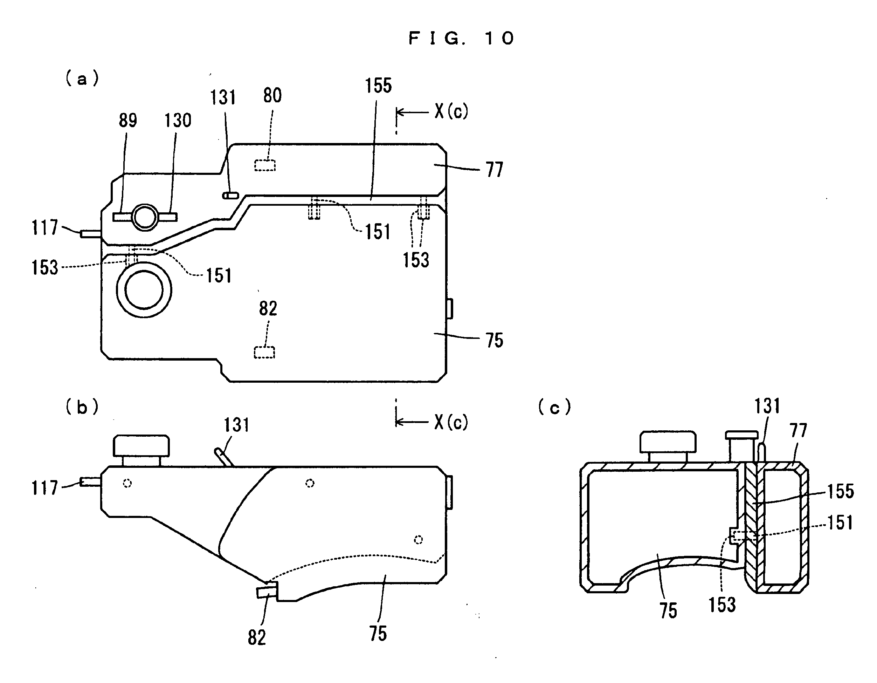

The fuel tank 75 has a lower portion provided with a high concentration methanol aqueous solution outlet 82 (See Fig. 10), with which a connecting pipe 83 is connected. The connecting pipe 83 is connected with an inlet (flow-in) end of a fuel pump 85 which is disposed below the fuel tank 75 and the aqueous solution tank 77. The fuel pump 85, which pumps the methanol fuel from the fuel tank 75 to the aqueous solution tank 77, is attached for example, integrally to the heat exchanger 79. The outlet (exiting end) of the fuel pump 85 is connected with a methanol fuel inlet 89 which is provided on the front end of the aqueous solution tank 77, via a connecting pipe 91.

Further, the heat exchange pipe P1 of the heat exchanger 79 includes an outlet 79a which is connected with an aqueous solution pump 95 via a connecting pipe 93. The aqueous solution pump 95 is disposed below the cell stack 73, and is disposed in a predetermined storage space enclosed by the rib 7c and other members on the left side surface of the plate member 7a of the front frame 7.

The aqueous solution pump 95 includes an output end connected with a filter 99 via a connecting pipe 97. The filter 99 is disposed in a predetermined storage space enclosed by the rib 7c and other members on the right side surface of the plate member 7a of the front frame 7, and removes impurities contained in the methanol aqueous solution flowing through the connecting pipe 97.

The outlet of the filter 99 is connected with a connecting pipe 101. The connecting pipe 101 is connected with a fuel inlet I1 which is disposed at the bottom of the cell stack 73, for example, for supplying the fuel (methanol aqueous solution).

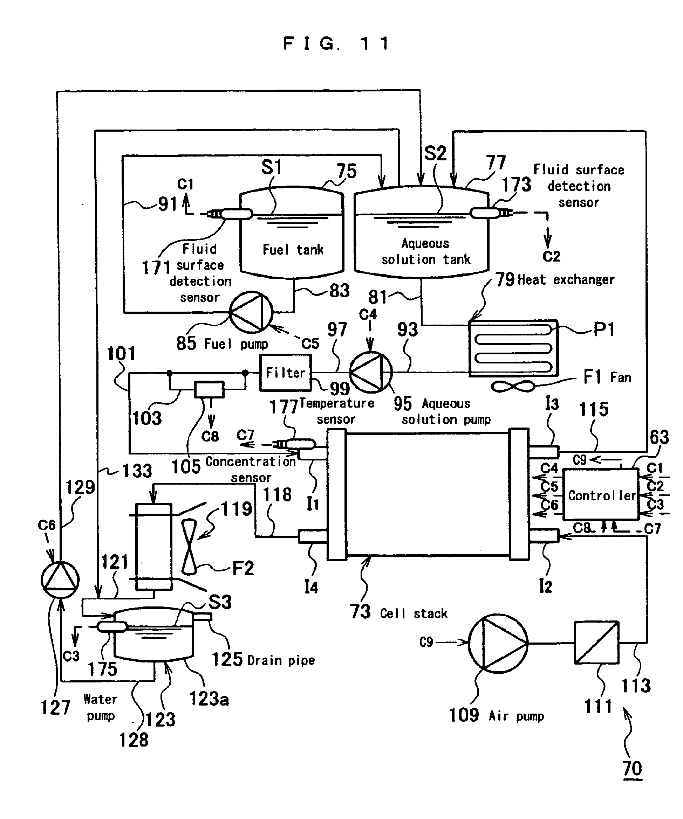

At a predetermined location in the connecting pipe 101 between the filter 99 and the cell stack 73, a branch pipe (branch piping) 103 which branches from the connecting pipe 101 is provided. The branch pipe 103 is provided with a concentration sensor 105 (See Fig. 11) defining a concentration detector which detects the concentration of the methanol aqueous solution flowing through the connecting pipe 101 ultrasonically, for example, and transmits to the controller 63 a concentration signal (indicated by an alpha-numerical code C8 in Fig. 11) that represents the detected level of concentration.

The curved pipe 31 in the seat rail 27 is provided with a support bracket 107 protruding therefrom, which supports an air pump 109 that is disposed between the seat supporting pipes 33a, 33b and between the branch pipes 34a, 34b of the seat rail 27. The air pump 109 is disposed above the cell stack 73 and in front of the fuel tank 75 and the aqueous solution tank 77.

Behind the air pump 109 and disposed between the seat supporting pipes 33a, 33b and the branch pipes 34a, 34b, is a chamber 111 for removing pulsation from supplied air. The chamber 111 is connected with an output side of the air pump 109. The chamber 111 is connected to an air intake I2 at, for example, an upper region of the cell stack 73 via a connecting pipe 113. In the present embodiment, the air pump 109 and the connecting pipe 113 are included in an air supplier.

The cell stack 73 is provided with a carbon dioxide (including unused methanol and water vapor) discharge port I3 at a diagonal location with respect to the fuel inlet I1. The carbon dioxide discharge port I3 is connected with a carbon dioxide (unused methanol) inlet 117 provided on a front side end of the aqueous solution tank 77 via a connecting pipe 115.

The cell stack 73 is provided with an air (water vapor) outlet I4 at a diagonal location with respect to the air inlet I2, for discharging air (water vapor) as an exhaust gas. The air outlet I4 is connected with an inlet end of the heat exchange pipe P2 of an exhaust gas cooler (gas/liquid separator) 119 for cooling the air (water vapor) via a connecting pipe 118. The exhaust gas cooler 119 is ahead and above the rear end (curved portion) of the front frame 7, and mounted along a forward surface of the flange 7b2 of the front frame 7. As understood from Fig. 2 through Fig. 4, by disposing the exhaust gas cooler 119 in front of the front frame 7 and substantially at the center, the exhaust gas cooler 119 is positively blown by running wind while the vehicle is moving, enabling to cool the water vapor efficiently. The exhaust gas cooler 119 discharges more heat to the outside than does the heat exchanger 79. By disposing the exhaust gas cooler 119 which discharges a large amount of heat away from the fuel tank 75 and the aqueous solution tank 77, evaporation of methanol is prevented.

Further, the outlet end of the heat exchange pipe P2 of the exhaust gas cooler 119 is connected with a water tank 123 via a connecting pipe 121. The water tank 123 is disposed in a predetermined storage space below the cell stack 73 on the left side surface of the plate member 7a in the front frame 7.

The water tank 123 includes a tank main body 123a which receives gas (exhaust gas). A drain pipe (drain piping) 125 for discharging the gas is disposed at an upper portion of the tank main body 123a.

Further, below the cell stack 73 and on the left side surface of the plate member 7a in the front frame 7, there is disposed a water pump 127. The water pump 127 is connected with a connecting pipe 128 which is connected with a bottom of the tank main body 123a. The output end of the water pump 127 is connected with a water inlet 130 (See Fig. 10) which is provided at a front end of the aqueous solution tank 77, via a connecting pipe 129. In the present embodiment, the water pump 127 and the connecting pipes 128, 129 define a water supplier.

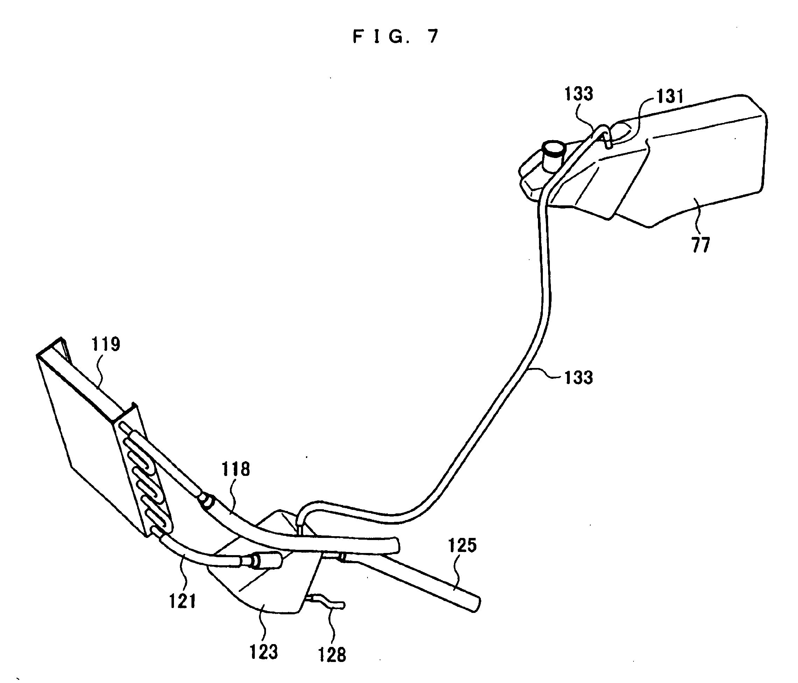

As clearly understood from Fig. 7, the aqueous solution tank 77 includes an upper region provided with a carbon dioxide outlet 131. The carbon dioxide outlet 131 is connected with an end of a connecting pipe 133. The connecting pipe 133 introduces to the water tank 123 carbon dioxide which is discharged from the carbon dioxide discharge port I3 of the cell stack 73, via the connecting pipe 115 and the carbon dioxide inlet 117, to the aqueous solution tank 77.

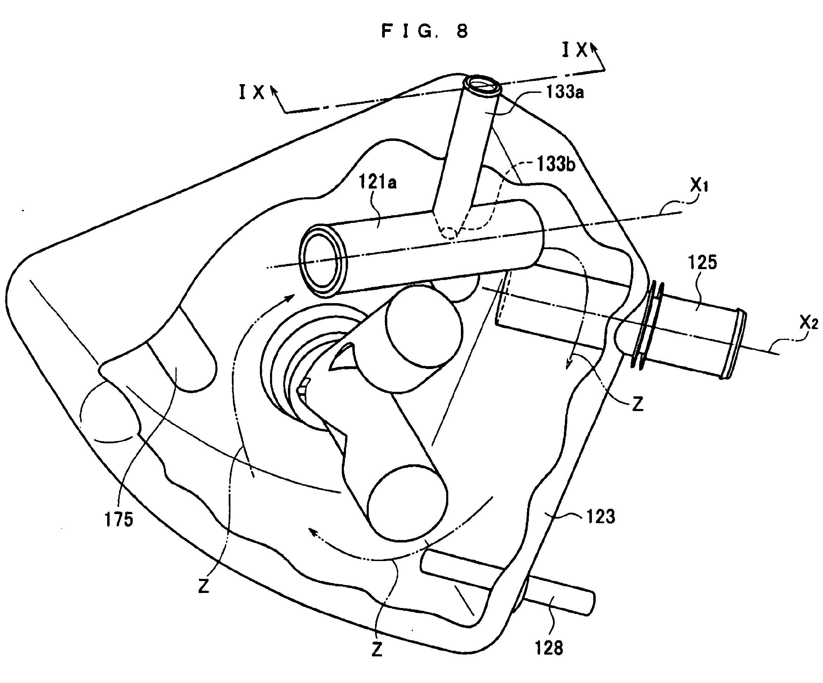

As shown in Fig. 8, the other end of the connecting pipe 133 is connected to an intermediate portion of the connecting pipe 121 which connects the exhaust gas cooler 119 and the water tank 123.

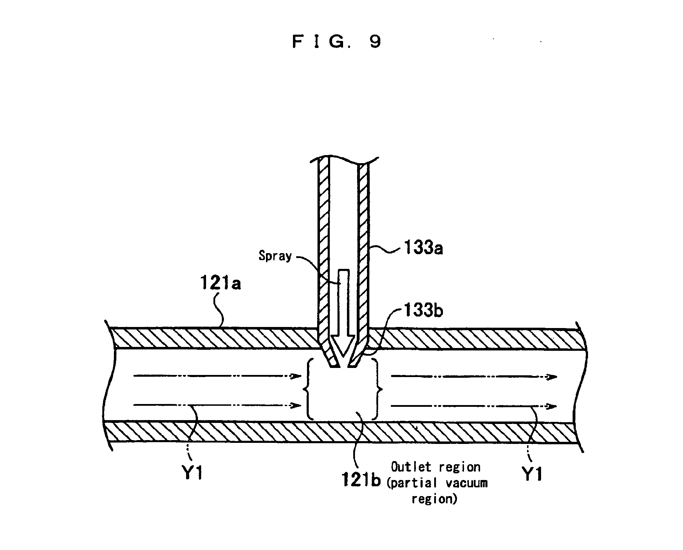

Specifically, as shown in Fig. 9, a lower end 133a of the connecting pipe 133 is connected with a water-tank-facing end 121a perpendicularly to an axis of the water-tank-facing end 121a of the connecting pipe 121. In this arrangement, a penetrating end 133b of the connecting pipe 133, which extends into the connecting pipe 121, is tapered into the connecting pipe 121, i.e. with the diameter gradually reduced as the pipe goes into the connecting pipe 121.

Further, as shown in Fig. 8, the connecting pipe 121 extends inside the water tank 123. The pipe axis X1 does not extend parallel to a pipe axis X2 of the drain pipe 125 which extends inside the water tank 123.

As shown in Fig. 10(a) through Fig. 10(c), the fuel tank 75 is a hollow body having a substantially box-like shape in a plan view and in a side view. The aqueous solution tank 77 is a hollow body, having a shape defined by the remainder of a substantially parallelepiped body without the box-like fuel tank 75.

Mutually opposed surfaces of the fuel tank 75 and the aqueous solution tank 77 mate substantially with each other. One of the opposed surfaces (for example, the opposed surface in the aqueous solution tank 77) is provided with a plurality of (for example, three) fitting studs 151 protruding therefrom toward the other of the opposed surfaces (for example, the opposed surface in the fuel tank 75).

In the above-described arrangement, the opposed surface in the fuel tank 75 is provided with a plurality of (e.g. three) fitting recesses 153 at locations corresponding to the fitting studs 151, each to be engaged with one of the fitting studs 151. As the fitting studs 151 are engaged with the recesses 153, the aqueous solution tank 77 is disposed in close proximity to the fuel tank 75, with a predetermined distance (gap) between the opposed surfaces.

In the above-described arrangement, the gap between the fuel tank 75 and the aqueous solution tank 77 is filled with a heat insulation member 155. The fuel tank 75 and the aqueous solution tank 77 are thus integrated with each other. By configuring the fuel tank 75 and the aqueous solution tank 77 as an integrated tank as described above, it becomes possible when attaching the tank to the seat rail 27 to reduce the number of parts which need to be assembled and to increase productivity in the assembling operation than in a case where each must be assembled individually.

As shown in Fig. 11, the fuel tank 75 is provided with a fluid surface detection sensor 171 defining a fuel data detector. The fluid surface detection sensor 171 detects the fluid surface height of methanol fuel S1 in the fuel tank 75, and transmits a sensor signal (indicated by an alpha-numerical code C1 in Fig. 11) to the controller 63.

The aqueous solution tank 77 is provided with a fluid surface detection sensor 173 defining an aqueous solution data detector. The fluid surface detection sensor 173 detects the fluid surface height of methanol aqueous solution S2 in the aqueous solution tank 77, and transmits a sensor signal (indicated by an alpha-numerical code C2 in Fig. 11) to the controller 63.

The water tank 123 is provided with a fluid surface detection sensor 175 defining a water data detector. The fluid surface detection sensor 175 detects the fluid surface height of water S3 in the water tank 123, and transmits a sensor signal (indicated by an alpha-numerical code C3 in Fig. 11) to the controller 63.

Further, a temperature sensor 177 is provided near the fuel inlet I1 in the cell stack 73. The temperature sensor 177 detects temperatures of methanol aqueous solution supplied via the fuel inlet 11, and transmits a temperature detection signal (indicated by an alpha-numerical code C7 in Fig. 11) to the controller 63.

The controller 63 of the fuel cell system 70 provides control of the operation of at least one of the fuel pump 85, the aqueous solution pump 95, the air pump 109 and the water pump 127 as necessary based on the detection signals sent from the above sensors 105, 171, 173 and 175. The fuel pump 85, the aqueous solution pump 95, the air pump 109 and the water pump 127 are respectively controlled by corresponding control signals C5, C4, C9 and C6 from the controller 63.

Returning to Fig. 1, the handle support 11 of the two-wheeled vehicle 1 is covered by a handle cover 181. A region behind the head pipe 5 in the vehicle frame 3, i.e. the front frame 7 and the rear frame 9 as well as a lower region of the seat 37 (including each component of the fuel cell system 70), is covered by a seat cover 183. Further, a region behind the rear frame 9 (including the fuel tank 75 and the aqueous solution tank 77 in the fuel cell system 70) is covered by an upper cover 185 which extends in a rearward direction from the seat cover 183. A region behind the head pipe 5 (including the exhaust gas cooler 119 of the fuel cell system 70) is covered by a leg shield 187 which protects the rider's legs.

Next, an overall operation of the fuel cell system 70 mounted on the two-wheeled vehicle 1 according to the present embodiment will be described, with a focus on a power generating operation.
Methanol aqueous solution, which has a concentration of approximately 3%, is pumped from the aqueous solution tank 77 by the aqueous solution pump 95, flows through the connecting pipe 81 and into the heat exchanger 79. While passing through the heat exchange pipes P1, the solution is cooled (through heat exchanging) by a fan F1 to a temperature suitable for the cell stack 73 (for example, approximately 40°C).

The methanol aqueous solution which has been cooled flows through the connecting pipes 93 and 97, and into the filter 99, where impurities are removed. Then, the solution flows through the connecting pipe 101 and the fuel inlet I1, and is supplied directly to the anode side of the cell stack 73.

On the other hand, air is pumped by the air pump 109, sent to the chamber 111 for decreased pulsation, and then supplied to the cathode side via the connecting pipe 113 and the air inlet 12 of the cell stack 73.

During this step, on the anode side at each battery cell of the cell stack 73, methanol and water in the supplied methanol aqueous solution chemically react with each other to produce carbon dioxide and hydrogen ions. The hydrogen ions flow to the cathode side via the electrolyte, and electrochemically react with oxygen in the air supplied to the cathode, to produce water and electric energy.
The generated electric energy is sent to the secondary battery 71 for storage, and is used for driving the two-wheeled vehicle 1 and for operating related components.

Meanwhile, at each battery cell, the electrochemical reaction at the anode produces exhaust gas (primarily carbon dioxide (carbonic acid gas)), which is heated (for example, up to approximately 65°C-70°C) by heat generated in the electrochemical reaction. The exhaust gas (carbon dioxide) contains the high temperature methanol which was not used at the anode.

The exhaust gas (carbon dioxide) which contains unused methanol is returned to the aqueous solution tank 77 via the carbon dioxide discharge port I3 of the cell stack 73 and the connecting pipe 115.
After being returned to the aqueous solution tank 77, the exhaust gas (carbon dioxide) containing unused methanol flows out of the aqueous solution tank 77 via the carbon dioxide outlet 131 located at an upper region of the aqueous solution tank 77 and flows through the connecting pipe 133.

The connecting pipe 133 extends a long distance from the aqueous solution tank 77 above the rear frame 9 to the connecting pipe 121 in the front frame 7. Therefore, the exhaust gas (carbon dioxide) which contains unused methanol is cooled sufficiently in the connecting pipe 133 to, for example, approximately 40°C, and flows toward the water-tank-facing end 121a of the connecting pipe 121, namely, flows toward the connecting pipe which connects the exhaust gas cooler 119 and the water tank 123.

Meanwhile, water vapor generated at the cathode flows through the air (water vapor) outlet port I4 and the connecting pipe 118, and through the heat exchange pipe P2 of the exhaust gas cooler 119, during which cooling (temperature decrease) is provided by a fan F2, for separation into gas and liquid.

The gas (water vapor) thus divided flows through the connecting pipe 121 (See arrow Y1 in Fig. 9) at a high velocity (for example, at approximately 140 liters per minute), and flows into the water tank 123 via the water-tank-facing end 121a.

On the other hand, as described above, the exhaust gas (carbon dioxide) containing unused methanol is sent to the water-tank-facing end 121a of the connecting pipe 121, via the connecting pipe 133.

During this process, if the pressure in the aqueous solution tank 77 is less than the pressure in the water tank 123, then it is not possible to return the exhaust gas (carbon dioxide) containing unused methanol to the water tank 123, and thus, it is not possible to recover the unused methanol.

One idea may be to keep the pressure in the aqueous solution tank 77 greater than the pressure in the water tank 123. In this case, however, the higher pressure will increase the amount of carbon dioxide dissolved in the aqueous solution tank 77, as well as the load on the fuel pump 85 which sends methanol fuel to the aqueous solution tank 77, and the load on the water pump 127 which returns water to the aqueous solution tank 77. These may result in reduced energy efficiency.

In the present embodiment, as shown in Fig. 8 and Fig. 9, the tip 133b of the connecting pipe 133 drives into the connecting pipe 121. Thus, in the connecting pipe 121, an outlet region 121b around the connecting pipe lower end 133a virtually has a decreased pipe diameter. As a result, gas which is flowing in the connecting pipe 121, has an increased flow velocity at the outlet region 121b, and under the Bernoulli's principle, the pressure at the outlet region 121b becomes less than in regions adjacent thereto (i.e., a negative pressure is generated in the outlet region 121b). As a result, carbon dioxide which flows into the connecting pipe lower end 133a is sucked into the connecting pipe 121 under the atomizer principle, and flows into the water tank 123 with other gases which are flowing in the connecting pipe 121 at a high velocity.

Meanwhile, in the water tank 123 in the present embodiment, the pipe axis X1 of the connecting pipe 121 is not parallel to the pipe axis X2 of the drain pipe 125 which is connected inside the water tank 123, as shown in Fig. 8. Because of this, most of the gas flowing into the water tank 123 hits the walls in the water tank 123 and circulates in the tank as indicated by arrows Z in the figure, while liquid, i.e. aqueous solution of unused methanol, drips efficiently in the water tank 123, and is gradually discharged from the drain pipe 125.

As a result, according to the present embodiment, unused methanol contained in carbon dioxide which is generated by the electrochemical reaction in the cell stack 73 is recovered easily and efficiently at the water tank 123 without decreasing overall energy efficiency.

While the fuel cell system 70 is generating electricity, the controller 63 controls the operation of the fuel pump 85, the aqueous solution pump 95, the air pump 109 and the water pump 127, based on a concentration signal C8 indicating the concentration of the methanol aqueous solution detected by the concentration sensor 105, a sensor signal C1 regarding the height of fluid surface S1 within the fuel tank 75 detected by the fluid surface detection sensor 171, a sensor signal C2 regarding the height of fluid surface S2 within the aqueous solution tank 77 detected by the fluid surface detection sensor 173, a sensor signal C3 regarding the height of fluid surface S3 within the water tank 123 detected by the fluid surface detection sensor 175, and a temperature detection signal C7 of the methanol aqueous solution for direct transmission to the cell stack 73 detected by the temperature sensor 177, as well as other information.

According to the present embodiment, by disposing the fuel tank 75 and the aqueous solution tank 77 next to each other behind the seat 37, sufficient working space can be secured around the fuel tank 75 and the aqueous solution tank 77. This makes easy to attach and remove the fuel tank 75 and the aqueous solution tank 77, enabling to improve maintainability.

Further, by disposing the cell stack 73 which is connected with a plurality of components in the fuel cell system 70, below the seat 37 i.e. substantially at the center of the two-wheeled vehicle 1, it becomes possible to dispose all components of the fuel cell system 70 easily, and to shorten piping between the components easily. Further, by disposing the cell stack 73 which is a heavy component substantially at the center of the two-wheeled vehicle 1, a good weight balance is achieved in the two-wheeled vehicle 1, enabling to improve stability.

Further, since the fuel tank 75 and the aqueous solution tank 77 are disposed as extending forward, it becomes possible to further simplify the piping between the components in the fuel cell system 70. In particular, the aqueous solution tank 77 which is connected with a plurality of connecting pipes is disposed as extending forward, i.e. toward the center of the two-wheeled vehicle 1. This arrangement allows the aqueous solution tank 77 to be closer to each of the components of the fuel cell system 70 which are connected with the aqueous solution tank 77, enabling to simplify the piping.

Further, by disposing the heat exchanger 79 below the seat 37 and behind the cell stack 73, a layout has become possible which allows the aqueous solution tank 77, the heat exchanger 79 and the cell stack 73 to lay sequentially from rear toward front. Therefore, piping from the aqueous solution tank 77 to the cell stack 73 can be simplified without any need for bypassing the route of methanol aqueous solution, and the methanol aqueous solution from the aqueous solution tank 77 can be supplied quickly to the cell stack 73 via the heat exchanger 79.

Further, the fuel tank 75 and the aqueous solution tank 77 which are integrated with each other have a total width that is not greater than the width of the seat 37. This allows the fuel tank 75 and the aqueous solution tank 77 to be placed behind the seat 37 without protruding sideways with respect to the seat 37. Therefore, if the two-wheeled vehicle 1 is rolled down on its side, damage to the fuel tank 75 and the aqueous solution tank 77 is not very likely to happen. Further, since the weight is not spread in lateral directions, riding stability of the two-wheeled vehicle 1 when the vehicle is tilted for making a turn for example can be improved.

Further, by disposing the fuel tank 75 and the aqueous solution tank 77 next to each other such that the two tanks have their bottom surfaces at substantially the same height, it becomes possible to substantially equate the fluid level of methanol fuel held in the fuel tank 75 to the fluid level of methanol aqueous solution held in the aqueous solution tank 77. Therefore, when supplying the methanol fuel from the fuel tank 75 to the aqueous solution tank 77 by using the fuel pump 85 which is disposed below the fuel tank 75 and the aqueous solution tank 77, it is possible to reduce pressure difference between the inlet and the outlet of the fuel pump 85 caused by the fluid level difference in the tanks. As a result, it becomes possible to use a fuel pump 85 which has a relatively small pumping capacity, and to improve supplying accuracy of the methanol fuel by the fuel pump 85. Therefore, it is possible to design and manufacture the fuel pump 85 easily, and to reduce the cost of design and manufacture of the entire fuel cell system 70 which is to be mounted on the two-wheel vehicle 1. Further, by disposing the fuel pump 85 below the fuel tank 75, it becomes easy to gravitationally supply the methanol fuel from the fuel tank 75 to the fuel pump 85.

In present embodiment, the fuel tank 75 and the aqueous solution tank 77 are placed side by side right behind the seat 37, however, the fuel tank 75 and the aqueous solution tank 77 may be disposed next to each other anywhere as long as they are behind the seat 37 and there is enough space. For example, the fuel tank and the aqueous solution tank may be disposed next to each other above and behind the seat.

In the present embodiment, the fuel tank 75 and the aqueous solution tank 77 are disposed side by side so one comes on the right side while the other on the left, however, the tanks may take whatsoever shape and be disposed in whatsoever layout. For example, the fuel tank and the aqueous solution tank may be placed in tandem so that one comes behind the other. In this case, the aqueous solution tank is preferably placed ahead of the fuel tank for easy piping.

Further, in the present embodiment, methanol is used as fuel and methanol aqueous solution is used as aqueous solution of the fuel; however, the present invention is not limited by this. The fuel may be provided by other alcoholic fuel such as ethanol, and the fuel aqueous solution may be provided by other alcoholic aqueous solution such as ethanol aqueous solution.

In addition, the present embodiment provides a two-wheeled vehicle as the saddle-type vehicle equipped with a fuel cell system; however, the present invention is not limited by this, and the saddle-type vehicle may be of any other type including tricycles, four-wheeled vehicles, etc.

The present invention being thus far described and illustrated in detail, it is obvious that these description and drawings only represent an example of the present invention, and should not be interpreted as limiting the invention. The scope of the present invention is only limited by the accompanied claims.

## Claims

1. A saddle-type vehicle comprising:
a seat for a rider to ride on,
an aqueous solution tank for storing fuel aqueous solution;
a fuel tank for storing fuel to be supplied to the aqueous solution tank; and
a fuel cell stack supplied with the fuel aqueous solution from the aqueous solution tank for generation of electric energy through electrochemical reactions;
wherein the fuel tank and the aqueous solution tank are disposed next to each other behind the seat.

2. The saddle-type vehicle according to Claim 1, wherein the fuel cell stack is disposed below the seat.

3. The saddle-type vehicle according to Claim 2, further comprising a heat exchanger disposed below the seat and behind the fuel cell stack for cooling the fuel aqueous solution from the aqueous solution tank.

4. The saddle-type vehicle according to Claim 1, wherein a total width of the fuel tank and the aqueous solution tank is not greater than a width of the seat.

5. The saddle-type vehicle according to Claim 1, wherein the fuel tank and the aqueous solution tank are disposed next to each other substantially at a same height,
the saddle-type vehicle further comprising a fuel pump disposed below the fuel tank and the aqueous solution tank, and connected with the fuel tank and the aqueous solution tank for pumping the fuel from the fuel tank to the aqueous solution tank.

6. The saddle-type vehicle according to Claim 1, wherein the aqueous solution tank is disposed as extending ahead.

## Patentansprüche

1. Fahrzeug vom Aufsitz- Typ, aufweisend:
einen Sitz für einen Fahrer, um darauf zu fahren,
einen Tank für eine wässrige Lösung, um wässrige Brennstofflösung aufzubewahren;
einen Brennstofftank, um Brennstoff aufzubewahren, um zu dem wässrige Brennstofflösung- Tank zugeführt zu werden; und
einen Brennstoffzellenstapel, versorgt mit der wässrigen Brennstofflösung aus dem wässrige Lösung- Tank, um elektrische Energie durch elektrochemische Reaktionen zu erzeugen;
wobei der Brennstofftank und der wässrige Lösung- Tank nahe zueinander hinter dem Sitz angeordnet sind.

2. Fahrzeug vom Aufsitz- Typ nach Anspruch 1, wobei der Brennstoffzellenstapel unter dem Sitz angeordnet ist.

3. Fahrzeug vom Aufsitz- Typ nach Anspruch 2, außerdem aufweisend einen Wärmetauscher, angeordnet unter dem Sitz und hinter dem Brennstoffzellenstapel, um die wässrige Brennstofflösung aus dem wässrige Lösung- Tank zu kühlen.

4. Fahrzeug vom Aufsitz- Typ nach Anspruch 1, wobei eine Gesamtbreite des Brennstofftanks und des wässrige Lösung- Tanks nicht größer als eine Breite des Sitzes ist.

5. Fahrzeug vom Aufsitz- Typ nach Anspruch 1, wobei der Brennstofftank und der wässrige Lösung- Tank nahe zueinander im Wesentlichen in derselben Höhe angeordnet sind,
wobei das Fahrzeug vom Aufsitz- Typ außerdem aufweist eine Brennstoffpumpe, angeordnet unter dem Brennstofftank und dem wässrige Lösung- Tank, und mit dem Brennstofftank und dem wässrige Lösung- Tank verbunden, um den Brennstoff aus dem Brennstofftank in den wässrige Lösung- Tank zu pumpen.

6. Fahrzeug vom Aufsitz- Typ nach Anspruch 1, wobei der wässrige Lösung-Tank sich nach vorn erstreckend angeordnet ist.

## Revendications

1. Véhicule du type à selle, comprenant :
un siège pour un motocycliste,
un réservoir de solution aqueuse destiné à stocker une solution aqueuse de carburant ;
un réservoir de carburant destiné à stocker du carburant à amener dans le réservoir de solution aqueuse ; et
un bloc de piles à combustible alimenté en solution aqueuse de carburant par le réservoir de solution aqueuse pour produire de l'énergie électrique grâce à des réactions électrochimiques ;
étant précisé que le réservoir de carburant et le réservoir de solution aqueuse sont disposés côte à côte derrière le siège.

2. Véhicule du type à selle selon la revendication 1, étant précisé que le bloc de piles à combustible est disposé sous le siège.

3. Véhicule du type à selle selon la revendication 2, comprenant par ailleurs un échangeur de chaleur disposé sous le siège et derrière le bloc de piles à combustible, pour refroidir la solution aqueuse provenant du réservoir de solution aqueuse.

4. véhicule du type à selle selon la revendication 1, étant précisé qu'une largeur totale du réservoir de carburant et du réservoir de solution aqueuse n'est pas supérieure à une largeur du siège.

5. Véhicule du type à selle selon la revendication 1, étant précisé que le réservoir de carburant et le réservoir de solution aqueuse sont disposés côte à côte globalement à la même hauteur,
le véhicule du type à selle comprenant par ailleurs une pompe à carburant qui est disposée sous le réservoir de carburant et le réservoir de solution aqueuse et qui est reliée au réservoir de carburant et au réservoir de solution aqueuse pour pomper le carburant dans le réservoir de carburant et l'amener dans le réservoir de solution aqueuse.

6. Véhicule du type à selle selon la revendication 1, étant précisé que le réservoir de solution aqueuse est disposé de manière à s'étendre vers l'avant.
